# EUROPEAN PATENT SPECIFICATION

(11) **EP 2 981 694 B1**
(45) Date of publication and mention of the grant of the patent: **08.12.2021**
(21) Application number: 14779646.0
(22) Date of filing: 25.03.2014
(51) Int. Cl.: F02B 39/14, F02B 37/00, F01M 7/00, F04B 17/05, F01M 1/08

(54) **EXHAUST-GAS TURBOCHARGER**
ABGASTURBOLADER
TURBOCOMPRESSEUR À GAZ D'ÉCHAPPEMENT

(30) Priority: 04.04.2013 DE 102013005924
(43) Date of publication of application: 10.02.2016
(73) Proprietor: Borgwarner Inc., Auburn Hills, MI 48326 (US)
(72) Inventor: SCHMITT, Frank, 55131 Mainz (DE); ZEPPEI, Dieter, 67098 Bad Dürkheim (DE)
(74) Representative: Baur & Weber Patentanwälte PartG mbB
(86) International application number: PCT/US2014/031715
(87) International publication number: WO 2014/165352

(56) References cited:
- WO-A2-2012/126473
- JP-A- H06 101 494
- JP-A- S58 180 727
- JP-A- 2004 183 781
- US-A- 4 541 784
- US-A- 4 541 784
- US-A- 4 599 862
- US-A- 5 045 711
- US-A1- 2002 095 935
- US-A1- 2008 127 627
- US-A1- 2011 158 803

## Description

The invention relates to an exhaust-gas turbocharger according to the preamble of claim 1.

An exhaust-gas turbocharger of the generic type has a turbine with a turbine wheel in a turbine housing, a compressor wheel in a compressor housing and a shaft, which bears the turbine wheel and the compressor wheel at its ends. The shaft is arranged in a bearing housing connected at one end to the turbine housing and at the other end to the compressor housing. The bearing housing has a bearing arrangement for the shaft and is provided with a lubricant device for the bearing arrangement. Oil is commonly used as the lubricant.

US 4 599 862 A discloses a turbocharger particularly adapted for use with two-cycle engines and including provision for lubrication at both high and low speeds as well as automatic enriching of the fuel mixture during turbo boost. JP 4061001494 A discloses a turbocharger provided with a nozzle lubricant injection device which sprays lubricant on the shaft bearings.

It is an object of the present invention to provide an exhaust-gas turbocharger of the type indicated in the preamble of claim 1 which is provided with a lubricant device with little loss in friction power.

This object is achieved by the features of claim 1.

The dependent claims contain advantageous developments of the invention.

Since the lubricant device is provided with at least one injection nozzle for lubricant, it is possible to nebulize the lubricant, in particular oil, and to thereby achieve optimized metering of oil in the bearing arrangement, in particular a rolling bearing arrangement.

Lubrication with little loss in friction power can be achieved by optimized metering of lubricant of this type.

To this end, the injection nozzle can have one or more injection openings in a nozzle body which can be opened and closed by means of a nozzle needle.

Alternatively, it is possible to integrate a sleeve with a sleeve body in the lubricant device as the injection nozzle, said sleeve body having an injection opening, the diameter of which is smaller than the lubricant supply opening or the lubricant supply duct.

To produce an injection opening of this type, suitable production processes, such as laser treatment or erosion, can be used to make a blind hole in the sleeve body subsequent to the lubricant supply opening, the diameter of which blind hole is smaller than that of the lubricant supply opening, in order to make it possible to produce an optimized diameter for the oil supply.

Further details, features and advantages of the present invention become apparent from the following description of exemplary embodiments with reference to the drawing,
in which:
Figure 1 shows a schematically simplified illustration of an exemplary exhaust-gas turbocharger,
Figure 2 shows the detail E shown in Figure 1 in an enlarged illustration,
Figure 3 shows a schematically slightly simplified sectional illustration through an injection nozzle,
Figure 4 shows a schematically simplified sectional illustration through an alternative example of an injection nozzle, and
Figure 5 shows a sectional illustration, corresponding to Figure 4, through a further embodiment of an injection nozzle according to the invention.

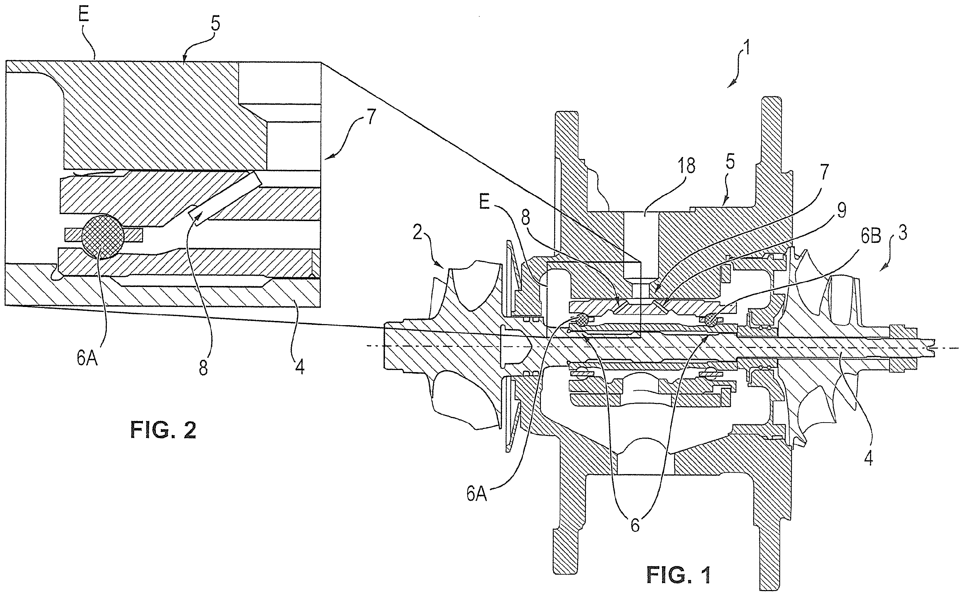

Figure 1 shows an exhaust-gas turbocharger 1 having a turbine and a compressor. The turbine is in this case symbolized by the turbine wheel 2, with the turbine housing, which surrounds the turbine wheel 2, having been omitted so as to simplify the illustration of Figure 1.

The turbine wheel 2 is in this case fastened to one end of a shaft 4, whereas a compressor wheel 3 is fastened to the other end of the shaft 4; the compressor wheel 3 is part of a compressor, the compressor housing of which, like the turbine housing, is not shown, however, since the illustration of this housing is not required for explaining the principles of the present invention.

As is further shown in Figure 1, a bearing housing 5 is provided, as is customary, between the turbine wheel 2 and the compressor wheel 3 for mounting the shaft 4. The bearing housing 5 has a bearing arrangement 6 for mounting the shaft 4. In the example shown in Figure 1, the bearing arrangement 6 is formed as a rolling bearing arrangement having two rolling bearings 6A and 6B. As Figure 1 shows, the rolling bearings 6A and 6B are arranged spaced apart from one another along the longitudinal extent of the shaft 4.

The exhaust-gas turbocharger 1 furthermore has a lubricant device 7, with oil preferably being used as the lubricant. The lubricant device 7 has a lubricant inlet 18, which, as is also evident from the enlarged illustration of the detail E in Figure 2, leads to two injection nozzles 8 and 9, which are arranged adjacent to the respectively assigned rolling bearings 6A and 6B in the bearing housing 5. According to the invention, however, the provision of one injection nozzle 8 or 9 already constitutes an optimization measure for improving lubrication.

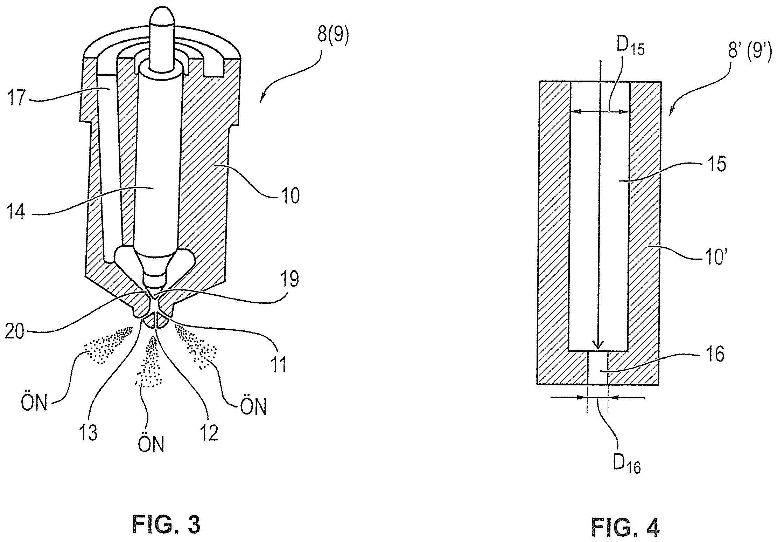

Figure 3 shows an example of an embodiment not part of the invention of such an injection nozzle 8 or 9. The injection nozzle 8 has a nozzle body 10, in which a lubricant inlet 17 is arranged. An injection needle 14 is provided centrically in the nozzle body 10 and can be displaced by way of an actuator (not shown in more detail in Figure 3) in the longitudinal direction in the nozzle body 10 in order to open and to close, in the example, three injection openings 11, 12 and 13. In this case, to open and close the injection openings 11 to 13, a tip 19 of the nozzle needle 14 is lifted from a sealing seat 20, or set down thereon for closing. The oil mists to be produced are symbolized by the three dotted areas ON. Figure 3 in this respect represents a particularly preferred embodiment of the injection nozzle 8 or 9, since a plurality of injection openings are provided. In principle, an embodiment with a single injection opening or else a greater number of injection openings is also conceivable.

Figure 4 shows an alternative embodiment not part of the invention of the injection nozzle, this being denoted in Figure 4 by the reference signs 8' and 9'. This injection nozzle 8' represents a simplified embodiment, in which a lubricant supply opening or a lubricant supply duct 15 is provided in the nozzle body 10' and issues into a blind hole 16, the diameter D₁₆ of which is smaller than the diameter D₁₅, as a result of which an oil mist can also be produced when lubricant is pressed into the lubricant supply duct 15 and ejected through the injection opening 16.

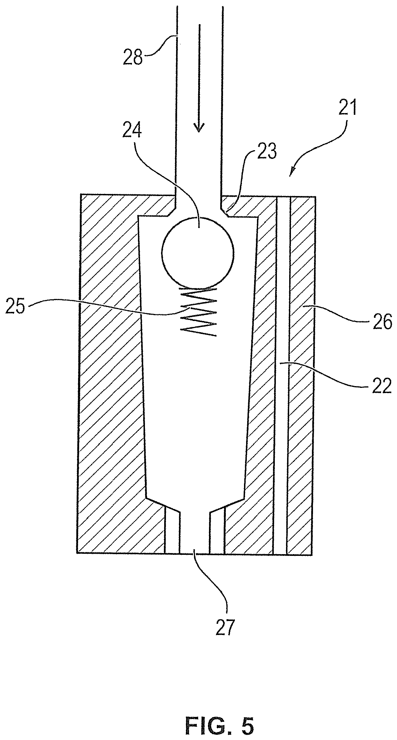

Figure 5 shows an embodiment of an injection nozzle 21 according to the invention. The injection nozzle 21 has a nozzle body 22, which is connected to an oil inlet 28 via a shut-off member, which comprises a sealing seat 23, a closing element 24 and a spring element 25 which pretensions the closing element 24 in the sealing direction. This shut-off member is preferably in the form of a non-return valve

The nozzle body 22 furthermore has an injection opening 27 and a bypass duct 26 reaching through the entire nozzle body 22, as is evident from Figure 5.

The bypass duct 26 is constantly open so as to allow the passage of a volumetric flow of oil at low rotational speeds. At relatively high rotational speeds, the thermal output to be dissipated is also higher given a corresponding load. Therefore, it is provided according to the invention that, above a certain selectable pressure, the injection nozzle 21 opens as the main nozzle, which is kept closed at low pressures by means of the above-described closing element 24.

If the injection nozzle 21 is connected to an adjustable oil pump (not shown in more detail in Figure 5), the injection nozzle 21 opens above a selectable pressure. This pressure is to be stipulated in such a way that the injection nozzle 21 or the shut-off member 23, 24, 25 thereof conceivably also opens earlier than is necessary for dissipating a thermal output which is present, because the characteristics and the setting parameters of adjustable oil pumps are not always known.

In addition to the above written disclosure of the invention, reference is hereby explicitly made to the illustrative presentation thereof in Figures 1 to 5.

### List of reference signs

- 1: Exhaust-gas turbocharger
- 2: Turbine wheel
- 3: Compressor wheel
- 4: Shaft
- 5: Bearing housing
- 6: Bearing arrangement
- 6A, 6B: Rolling bearing
- 7: Lubricant device
- 8, 9, 8', 9': Injection nozzle
- 10, 10': Nozzle body
- 11, 12, 13, 16: Injection opening
- 17: Lubricant inlet/oil inlet
- 18: Lubricant supply opening of the lubricant device 7
- 19: Tip of the nozzle needle 14
- 20: Sealing seat
- 21: Injection nozzle
- 22: Nozzle body
- 23: Sealing seat
- 24: Closing element
- 25: Pretensioning element/spring element
- 26: Bypass duct
- 27: Injection opening
- 28: Oil supply
- E: Detail
- ON: Oil mist

## Claims

1. An exhaust-gas turbocharger (1)
having a turbine wheel (2);
having a compressor wheel (3);
having a shaft (4), which bears the turbine wheel (2) and the compressor wheel (3); and
having a bearing housing (5),
• which has a bearing arrangement (6) for the shaft (4), and
• which has a lubricant device (7) for the bearing arrangement (6), wherein
the lubricant device (7) has at least one injection nozzle (8, 9; 8', 9'), which is arranged adjacent to the bearing arrangement (6) in the bearing housing (5) to produce a lubricant mist (ON), wherein the injection nozzle (21) has an injection opening (27) which can be opened depending on a selectable pressure, wherein the injection nozzle (21) has a nozzle body (22), in which provision is made of a constantly open bypass duct (26), and wherein the injection nozzle (21) is connected to an adjustable oil pump.

2. The exhaust-gas turbocharger as claimed in claim 1, wherein the injection nozzle (8, 9) has a nozzle body (10) with at least one injection opening (11, 12, 13), which can be opened and closed by means of a nozzle needle(14).

3. The exhaust-gas turbocharger as claimed in claim 2, wherein the nozzle needle (14) is arranged such that it can be displaced longitudinally by means of an actuator in the nozzle body (10).

4. The exhaust-gas turbocharger as claimed in claim 1, wherein the injection nozzle (8', 9') has a nozzle body (10') with an injection opening (16), the diameter (D16) of which is smaller than a diameter (Dis) of a lubricant supply duct (15).

5. The exhaust-gas turbocharger as claimed in one of claims 1 to 4, wherein the bearing arrangement (6) is formed as a rolling bearing arrangement (6A, 6B).

6. The exhaust-gas turbocharger as claimed in claim 5, wherein the rolling bearing arrangement (6) has two rolling bearings (6A, 6B) arranged spaced apart from one another.

7. The exhaust-gas turbocharger as claimed in claim 6, wherein each rolling bearing (6A, 6B) is assigned an injection nozzle (8 or 9).

8. The exhaust-gas turbocharger as claimed in claim 1, wherein a shut-off member for opening and closing the injection opening (27) is provided in the nozzle body (22) and has a sealing seat (23) and a pretensioned closing element (24) which are arranged subsequent to an oil supply (28) in the nozzle body (22).

## Patentansprüche

1. Ein Abgasturbolader (1)
mit einem Turbinenrad (2);
mit einem Verdichterrad (3);
mit einer Welle (4), die das Turbinenrad (2) und das Verdichterrad (3) trägt; und
mit einem Lagergehäuse (5),
• die eine Lagerung (6) für die Welle (4) aufweist, und
• die eine Schmiereinrichtung (7) für die Lageranordnung (6) aufweist, wobei
die Schmierstoffeinrichtung (7) mindestens eine Einspritzdüse (8, 9; 8', 9') aufweist, die benachbart zur Lageranordnung (6) im Lagergehäuse (5) zur Erzeugung eines Schmierstoffnebels (ON) angeordnet ist, wobei die Einspritzdüse (21) eine Einspritzöffnung (27) aufweist, die in Abhängigkeit von einem wählbaren Druck geöffnet werden kann, wobei die Einspritzdüse (21) einen Düsenkörper (22) aufweist, in dem ein ständig offener Bypass-Kanal (26) vorgesehen ist, und wobei die Einspritzdüse (21) mit einer verstellbaren Ölpumpe verbunden ist.

2. Abgasturbolader nach Anspruch 1, wobei die Einspritzdüse (8, 9) einen Düsenkörper (10) mit mindestens einer Einspritzöffnung (11, 12, 13) aufweist, die mittels einer Düsennadel (14) geöffnet und geschlossen werden kann.

3. Abgasturbolader nach Anspruch 2, wobei die Düsennadel (14) mittels eines Aktuators im Düsenkörper (10) längsverschiebbar angeordnet ist.

4. Abgasturbolader nach Anspruch 1, wobei die
Einspritzdüse (8', 9') einen Düsenkörper (10') mit einer Einspritzöffnung (16) aufweist, deren Durchmesser (D16) kleiner ist als ein Durchmesser (Dis) eines Schmierstoffzuführkanals (15).

5. Der Abgasturbolader nach einem der Ansprüche 1 bis 4,
wobei die Lageranordnung (6) als Wälzlageranordnung (6A, 6B) ausgebildet ist.

6. Abgasturbolader nach Anspruch 5, wobei die
Wälzlageranordnung (6) zwei im Abstand zueinander angeordnete Wälzlager (6A, 6B) aufweist.

7. Abgasturbolader nach Anspruch 6, wobei jedem Wälzlager (6A, 6B) eine Einspritzdüse (8 oder 9) zugeordnet ist.

8. Abgasturbolader nach Anspruch 1, wobei im Düsenkörper (22) ein Absperrorgan zum Öffnen und Schließen der Einspritzöffnung (27) vorgesehen ist, das einen Dichtsitz (23) und ein vorgespanntes Schließelement (24) aufweist, die im Anschluss an eine Ölversorgung (28) im Düsenkörper (22) angeordnet sind.

## Revendications

1. Turbocompresseur de gaz d'échappement (1)
ayant une roue de turbine (2) ;
ayant une roue de compresseur (3) ;
ayant un arbre (4), qui porte la roue de turbine (2) et la roue de compresseur (3) ; et
avec un logement de palier (5),
- qui présente un palier (6) pour l'arbre (4), et
- qui présente un dispositif de lubrification (7) pour le palier (6), dans lequel
le dispositif de lubrification (7) présente au moins une buse d'injection (8, 9 ; 8', 9') qui est disposée dans le logement de palier (5) à côté du dispositif de palier (6) pour produire un brouillard de lubrifiant (ON), la buse d'injection (21) présentant une ouverture d'injection (27) qui peut être ouverte en fonction d'une pression sélectionnable, la buse d'injection (21) présentant un corps de buse (22) dans lequel est prévu un canal de dérivation (26) ouvert en permanence, et la buse d'injection (21) étant reliée à une pompe à huile réglable.

2. Turbocompresseur à gaz d'échappement selon la revendication 1, dans lequel la buse d'injection (8, 9) présente un corps de buse (10) avec au moins une ouverture d'injection (11, 12, 13), qui peut être ouverte et fermée au moyen d'une aiguille de buse (14).

3. Turbocompresseur à gaz d'échappement selon la revendication 2, dans lequel l'aiguille de buse (14) est disposée de manière à pouvoir être déplacée longitudinalement au moyen d'un actionneur dans le corps de buse (10).

4. Turbocompresseur à gaz d'échappement selon la revendication 1, dans lequel la buse d'injection (8', 9') présente un corps de buse (10') avec une ouverture d'injection (16), dont le diamètre (D16) est inférieur à un diamètre (Dis) d'un canal d'alimentation en lubrifiant (15).

5. Turbocompresseur à gaz d'échappement selon l'une des revendications 1 à 4, dans lequel le palier (6) est réalisé sous la forme d'un palier à roulement (6A, 6B).

6. Turbocompresseur à gaz d'échappement selon la revendication 5, dans lequel le dispositif de palier à roulement (6) comporte deux paliers à roulement (6A, 6B) disposés à distance l'un de l'autre.

7. Turbocompresseur à gaz d'échappement selon la revendication 6, dans lequel chaque roulement (6A, 6B) est disposé à distance l'un de l'autre.
roulement (6A, 6B) est associé à une buse d'injection (8 ou 9).

8. Turbocompresseur à gaz d'échappement selon la revendication 1, dans lequel un organe de fermeture pour l'ouverture et la fermeture de l'ouverture d'injection (27) est prévu dans le corps de buse (22) et présente un siège d'étanchéité (23) et un élément de fermeture précontraint (24) qui sont disposés à la suite d'une alimentation en huile (28) dans le corps de buse (22).
